# EUROPÄISCHE PATENTSCHRIFT

(11) **EP 2 662 679 B1**
(45) Veröffentlichungstag und Bekanntmachung des Hinweises auf die Patenterteilung: **13.02.2019**
(21) Anmeldenummer: 13159198.4
(22) Anmeldetag: 14.03.2013
(51) Int. Cl.: G01M 3/18

(54) **Vorrichtung zum Fördern gefüllter Behälter und Prüfen derselben auf ausgetretene Flüssigkeit**
Device for conveying filled containers and testing the same for liquid that has leaked out
Dispositif pour transporter des récipients remplis et contrôler le liquide écoulé dans ceux-ci

(30) Priorität: 09.05.2012 DE 102012207736
(43) Veröffentlichungstag der Anmeldung: 13.11.2013
(73) Patentinhaber: ROBERT BOSCH GMBH, 70442 Stuttgart (DE)
(72) Erfinder: Bauer, Erich, 74564 Crailsheim (DE)

(56) Entgegenhaltungen:
- JP-A- 2008 039 464
- US-A1- 2006 042 357

## Beschreibung

### Stand der Technik

Um in Abfüllanlagen bereits gefüllte und verschlossene Behältnisse auf Leckagen zu untersuchen, sind Prüfstationen mit Elektrodenanordnungen bekannt, in welchen die Oberflächen gefüllter Behältnisse mit elektrischen Spannungen beaufschlagt werden, und ein sich einstellender Strom über die Oberfläche des Behältnisses gemessen wird. Ist die Oberfläche des Behältnisses durch ausgetretene Flüssigkeit benetzt, ist der Widerstand der Oberfläche des Behältnisses niedriger und der gemessene Strom höher. Über eine Kategorisierung des gemessenen Stroms hinsichtlich eines vordefinierten Schwellwerts kann somit entschieden werden, ob das gemessene Behältnis als dicht einzustufen ist oder eine Leckage angenommen werden muss. Um nur einseitig vorhandene Leckagen an zu prüfenden Behältnissen sicher zu detektieren, werden die Behältnisse bzw. Behälter dabei rotiert, um verschiedene Oberflächenbereiche mit der elektrischen Prüfspannung beaufschlagen zu können. Nach dem Eintreten einer Leckage kann es dabei passieren, dass die Anlage und insbesondere die Prüfelektroden mit ausgetretener Flüssigkeit benetzt sind, so dass auch nachfolgend prüfende Behälter als defekt erkannt werden, obwohl aus diesen keine Flüssigkeit ausgetreten ist. Um das Benetzen der Elektroden mit ausgetretener Flüssigkeit zu verringern, wird im Stand der Technik dabei insbesondere das zu prüfende Behältnis durch über diesem angeordnete Elektroden kontaktiert. Auf diese Weise kann zwar ein Flüssigkeitsübertrag vom Behältnis auf die Elektroden verringert werden, jedoch ist der Flüssigkeitsfilm, welcher sich oberhalb eines Behälters an dessen Oberfläche einstellt, häufig um ein mehrfaches dünner als wenn er unterhalb des Behälters gemessen würde. Je nach Oberfläche des Behältnisses kann eine Leckage des Behälters auch nahezu gänzlich ohne eine Benetzung dessen Oberfläche mit ausgetretener Flüssigkeit existieren, nämlich wenn die Oberfläche die Flüssigkeit nur schlecht oder gar nicht annimmt.

Ein weiteres Problem bekannter Dichtigkeitsprüfstationen besteht darin, dass der relativ komplexe Aufbau eine Reinigung, insbesondere des Transportsystems, nach einer Leckage erschwert und Wartungsarbeiten, beispielsweise an der Fördereinrichtung oder elektrischen Komponenten, sich langwierig und aufwendig gestalten. Infolgedessen sind lange Produktionsunterbrechungen mit entsprechenden Produktivitätsverlusten die Regel.

Aus der JP 2008039464A ist der gattungsbildende Stand der Technik bekannt.

Es ist daher eine Aufgabe der vorliegenden Erfindung, die zuvor genannten Nachteile zu vermeiden.

### Offenbarung der Erfindung

Die zuvor genannte Aufgabe wird erfindungsgemäß gelöst durch eine Vorrichtung mit den Merkmalen gemäß Anspruch 1 sowie ein Verfahren mit den Merkmalen gemäß Anspruch 9.

Entsprechend weist die Vorrichtung zum Fördern gefüllter Behälter in einer Förderrichtung und Prüfen derselben auf ausgetretene Flüssigkeit eine erste Führungseinheit zum Führen eines ersten Abschnitts eines Behälters auf. Die zu fördernden Behälter können beispielsweise Flaschen, lackierte Dosen, Ampullen, Vials und andere verschlossene, flüssigkeitsgefüllte Behälter sein. Das erfindungsgemäße Messprinzip funktioniert in allen Fällen, in welchen ausgetretene Flüssigkeit den elektrischen Widerstand zumindest eines Abschnitts der Behälteroberfläche messbar beeinflusst. Die erste Führungseinheit kann dabei beispielsweise eingerichtet sein, einen Abschnitt des Bodens eines geförderten Behälters zu führen. An zumindest einem Abschnitt weist die Führungseinheit eine erste Elektrode auf, welche für die Beaufschlagung der Behälteroberfläche mit einer elektrischen Spannung eingerichtet ist. Zusätzlich weist die Vorrichtung eine zweite Führungseinheit zum Führen eines zweiten Abschnitts, beispielsweise eines Bereiches des Flaschenhalses, des Deckels, oder eines anderen, dem Boden des zu fördernden Behälters gegenüberliegenden Abschnitts auf. Auch die zweite Führungseinheit umfasst eine Elektrode, welche eingerichtet ist, zumindest zeitweise zur Beaufschlagung der Behälteroberfläche mit einer elektrischen Spannung verwendet zu werden.

Weiter ist eine Rollierungseinheit in der Vorrichtung vorgesehen, welche einen Riementrieb aufweist, welcher eingerichtet ist, einen zu fördernden Behälter in Rotation zu versetzen. Hierbei kann der Riementrieb durch Reibschluss mit der Behälteroberfläche eine Rollierung des Behälters z.B. in eine der Förderrichtung entgegengesetzte Richtung bewirken. Bevorzugt ist die Rollierungseinheit zwischen der ersten und der zweiten Führungseinheit angeordnet, wobei ihr Riementrieb einen mittleren Bereich der zu fördernden Behälter berührt. Insbesondere kann die Rollierungseinheit hierzu eine gegenüber den den Behälter führenden Abschnitten der ersten Führungseinheit und der zweiten Führungseinheit niedriger angeordnet sein. Erfindungsgemäß sind die erste Führungseinheit, die zweite Führungseinheit und die Rollierungseinheit jeweils als zusammenhängende Module montiert. Mit anderen Worten bilden die drei Einheiten jeweils kompakte Baugruppen, welche im Wesentlichen jeweils im Ganzen und insbesondere mit wenigen "Handgriffen" zu einem Bestandteil der Vorrichtung zusammengesetzt werden. Hierzu weist die Vorrichtung einen Wechselmechanismus auf, mittels welchem die Rollierungseinheit im Ganzen mechanisch mit der ersten Führungseinheit in Verbindung gebracht bzw. von ihr entfernt werden kann. Die mechanische Verbindung definiert hierbei den relativen räumlichen Zustand, in welchem die Vorrichtung betrieben wird. Weiter ist der Wechselmechanismus eingerichtet, die zweite Führungseinheit im Ganzen mechanisch mit der Rollierungseinheit oder der ersten Führungseinheit in Verbindung zu bringen bzw. ihre Demontage zu ermöglichen. Mit anderen Worten kann die zweite Führungseinheit entweder zunächst mit der Rollierungseinheit über den Wechselmechanismus verbunden werden, und der Zusammenbau der zweiten Führungseinheit und der Rollierungseinheit anschließend mit der ersten Führungseinheit verbunden werden oder die zweite Führungseinheit unabhängig von der Rollierungseinheit mit der ersten Führungseinheit mechanisch verbunden werden. Entsprechendes gilt für ein Auflösen des Zusammenbaues der drei Einheiten mittels des Wechselmechanismus.

Erfindungsgemäß kann die Vorrichtung mittels einer Elektrode der ersten Führungseinheit im Zusammenwirken mit einer Elektrode der Rollierungseinheit einen geförderten Behälter abschnittsweise und senkrecht zur Förderrichtung mit einer elektrischen Spannung beaufschlagen. Ebenso ist die Vorrichtung eingerichtet, mittels einer Elektrode der zweiten Führungseinheit im Zusammenwirken mit einer Elektrode der Rollierungseinheit einen Behälter abschnittsweise und senkrecht zur Förderrichtung mit einer elektrischen Spannung zu beaufschlagen. Eine mögliche und technisch bevorzugte Beaufschlagungsrichtung besteht darin, die Elektrode bzw. die Elektroden der Rollierungseinheit gegenüber den Elektroden der ersten und der zweiten Führungseinheit mit einem höheren elektrischen Potential zu beaufschlagen und die Elektroden der ersten und der zweiten Führungseinheit beispielsweise auf Massenpotential zu halten. Eine alternative Beaufschlagungsrichtung besteht in einer entgegengesetzten Polarität, womit dieselbe Wirkung erzielt wird. Beide vorstehend genannten Ausführungsformen haben den Vorteil, dass die elektrischen Potentiale der einzelnen Einheiten jeweils einheitlich sind und Isolierungen bzw. Energieführungen einfacher verwirklicht werden können.

Die Unteransprüche zeigen bevorzugte Weiterbildungen der Erfindung.

Alternativ oder zusätzlich kann mittels des Wechselmechanismus' auch die elektrische Verbindung zwischen der zweiten Führungseinheit und der Rollierungseinheit hergestellt werden. Beispielsweise kann eine elektrische Verbindung zwischen der zweiten Führungseinheit und der ersten Führungseinheit unabhängig von der Rollierungseinheit hergestellt werden. Alternativ kann diese Verbindung jedoch auch über die zwischen der ersten und der zweiten Führungseinheit angeordnete Rollierungseinheit erfolgen. Bevorzugt kann hierbei die elektrische Verbindung zwischen jeweils zwei Einheiten über lediglich zwei elektrische Kontakte erfolgen, wodurch der Aufbau der Einheiten sich vereinfacht und beispielsweise auch die Fehlersuche hinsichtlich der Elektrik vereinfacht wird. Sofern in den Einheiten mehrere Elektroden mit jeweils gleichem elektrischem Potential angeordnet sind, kann eine elektrische Verbindung der Elektroden einer Einheit innerhalb einer jeden Einheit erfolgen. Somit gestalten sich elektrische Isolierungen und Anschlüsse zur Einbringung der elektrischen Energie in die Einheiten bzw. deren Elektroden noch einfacher. Weiter bevorzugt kann der Wechselmechanismus eine mechanische und eine elektrische Steckverbindung bzw. eine kombinierte Steckverbindung zur Herstellung der mechanischen und elektrischen Kontakte umfassen. Alternativ oder zusätzlich kann eine mechanische Schraubverbindung zwischen der ersten Führungseinheit, der zweiten Führungseinheit und der Rollierungseinheit dafür sorgen, dass die elektrische und mechanische Verbindung des Wechselmechanismus gegen ein unerwünschtes Lösen gesichert ist. Vorteilhaft kann hierbei die mechanische und die elektrische Verbindung bei einer in geeigneter Weise vordefinierten Relativbewegung zwischen der ersten Führungseinheit und der zweiten Führungseinheit bzw. zwischen der ersten Führungseinheit und der Rollierungseinheit sowie zwischen der Rollierungseinheit und der ersten Führungseinheit dafür sorgen, dass eine mechanische Verbindung der Einheiten mit einer elektrischen Verbindung der Einheiten einhergeht. Beispielsweise kann eine einfache translatorische Bewegung, bevorzugt unter Führung mittels zweier Stäbe in der ersten Führungseinheit oder unter Verwendung einer anderen Auflage für die Rollierungseinheit und die zweite Führungseinheit, dazu führen, dass eine mechanische Verbindung zwischen der zweiten Führungseinheit und der ersten Führungseinheit bzw. zwischen der zweiten Führungseinheit und der Rollierungseinheit und/oder zwischen der Rollierungseinheit und der ersten Führungseinheit zeitgleich mit einer elektrischen Verbindung der Einheiten einhergeht. Hierzu sind auch die elektrischen Steckkontakte der Einheiten zueinander derart orientiert und angeordnet, dass dieselbe translatorische Bewegung zwischen den Einheiten auch die elektrische Steckverbindung herstellt. Hierdurch entfallen zeitraubende und mechanisch anfällige Kabel zur Herstellung separater Steckverbindungen bei der Montage bzw. beim Zusammenbau der Einheiten.

Weiter bevorzugt kann die Elektrode der ersten Führungseinheit, die Elektrode der zweiten Führungseinheit, sowie die Elektrode der Rollierungseinheit eingerichtet sein, unterhalb des Schwerpunktes eines beförderten Behälters befindlichen Oberflächenbereich des Behälters elektrisch, insbesondere auch physikalisch, zu kontaktieren. Mit anderen Worten können unterhalb des Behältervolumens befindliche Oberflächenbereiche des Behälters den Elektroden der Einheiten gegenüber zumindest temporär derart angeordnet werden, dass eine elektrische Verbindung, ggf. anschließend eine gewisse Funkenstrecke zwischen der Elektrode und der Behälteroberfläche, eine Beaufschlagung der Behälteroberfläche mit elektrischer Spannung ermöglicht. Auch wenn die in der Praxis häufig verwendeten Spannungen Größenordnungen von bis zu 30 kV betragen und daher ein Durchschlagen entsprechender Funkenstrecken physikalisch möglich ist, ist der Fachmann bestrebt, zur Verringerung elektrischer Toleranzen einen Festkörperkontakt zwischen den Elektroden und der Oberfläche der Behälter zu ermöglichen. Auf diese Weise können Abstände zwischen den Elektroden und der Oberfläche der Behälter zwar toleriert werden, mit geringeren Abständen bzw. ohne Abstände zwischen den Elektroden und der Oberfläche der Behälter jedoch die Messtoleranzen erheblich reduziert werden.

Weiter bevorzugt sind mehrere Elektroden in der Rollierungseinheit vorgesehen und senkrecht zur Förderrichtung zueinander versetzt angeordnet. Fällt die Förderrichtung mit der Laufrichtung der Riemen der Rollierungseinheit zusammen, kann dies dadurch erreicht werden, dass beispielsweise eine erste Elektrode auf einer ersten Seite eines Riemens angeordnet ist und eine zweite Elektrode der Rollierungseinheit auf einer zweiten, der ersten Seite gegenüberliegenden Seite des Riemens, angeordnet ist. Insbesondere können diejenigen Elektroden der Rollierungseinheit, welche mit Elektroden der ersten Führungseinheit zusammenzuwirken eingerichtet sind, in Richtung der zweiten Führungseinheit tendieren. Andere Elektroden der Rollierungseinheit, welche eingerichtet sind, mit Elektroden der zweiten Führungseinheit zusammenzuwirken, können hingegen in Richtung der ersten Führungseinheit tendieren. Auf diese Weise ergeben sich überlappende Messstrecken zwischen den Elektrodenpaaren unterschiedlicher Messkanäle. Dies ermöglicht eine besonders sichere Erkennung, insbesondere von Leckagen räumlich geringer Ausdehnung.

Weiter bevorzugt können die Riemen der Rollierungseinheit als Rundriemen ausgestaltet sein und auf diese Weise einen besonders schmalen Querschnitt aufweisen. Hierdurch ist es möglich, wie vorstehend erläutert, zueinander versetzte Elektroden zwischen jeweils zwei Riemen des Riementriebs anzuordnen und dennoch eine gewisse räumliche Dichte der Elektroden zu verwirklichen.

Weiter bevorzugt können die Riemen der Rollierungseinheit als Flachriemen ausgestaltet sein und auf diese Weise eine besonders geringe Höhe bei gleichbleibendem Querschnitt aufweisen. Hierdurch ist es möglich, die Bauhöhe der Rollierungseinheit gering zu halten und einen guten Reibschluss zwischen den Riemen und den Behältern zu erzielen.

Weiter bevorzugt kann die Vorrichtung zusätzlich einen Schneckentrieb umfassen, welcher eingerichtet ist, zwischen sich und der Rollierungseinheit befindliche Behälter zu fördern. Der Schneckentrieb kann dabei in seiner Längserstreckungsrichtung der Förderrichtung folgen. Eine schneckenförmige Nut auf seiner Oberfläche kann dabei eingerichtet sein, zu fördernde Behälter zumindest zu einem Teil ihres Umfangs zu umschließen und bei einer Rotation des Schneckentriebs auf eine translatorische Bewegung der Behälter hinzuwirken. Insbesondere für den Fall, dass die Nut eine ungleichmäßige Steigung über der Länge des Schneckentriebs aufweist, kann der Abstand zwischen beförderten Behältern im Bereich der erfindungsgemäßen Vorrichtung auf vordefinierte Maße festgelegt werden.

Weiter kann erfindungsgemäß die zweite Führungseinheit und die Rollierungseinheit unabhängig vom Vorhandensein des Schneckentriebs aus der ersten Führungseinheit entnommen werden bzw. mit der ersten Führungseinheit verbunden werden. Dies bedingt den Vorteil, dass Reinigungsvorgänge und Wartungsarbeiten an der zweiten Führungseinheit und/oder der Rollierungseinheit vorgenommen werden können, ohne den Schneckentrieb vorher ebenfalls auszubauen. Hierzu kann der Schneckentrieb bevorzugt oberhalb der zu befördernden Behälter angeordnet sein.

Weiter bevorzugt können die Maße der Elektroden in Förderrichtung und die Geschwindigkeit des Riementriebs, insbesondere im Zusammenwirken mit dem Schneckentrieb nach Anspruch 7 oder 8 derart aufeinander abgestimmt sein, dass geförderte Behälter unter Kontakt mit einer jeden Elektrode um ein vorbestimmtes Maß um eine eigene Achse rotieren können. Insbesondere kann dabei vorgesehen sein, dass eine vollständige Umdrehung der zu prüfenden Behälter unter Kontakt mit einer jeden Elektrode verwirklicht wird. Mit anderen Worten kann entweder die Erstreckung der Elektroden in Förderrichtung sehr groß sein oder die Bewegung des Riementriebs und des Schneckentriebs derart gegenläufig zueinander konfiguriert sein, dass zu prüfende Behälter im Zuge ihrer translatorischen Bewegung mehr Rotationen pro Wegeinheit vollziehen, als wenn die Behälter auf einer feststehenden Unterlage abrollen würden. Auf diese Weise können die Elektroden in Förderrichtung eine geringere Erstreckung aufweisen und die erfindungsgemäße Vorrichtung kann insgesamt kompakter bemessen werden.

Gemäß einem weiteren Aspekt der vorliegenden Erfindung wird ein Verfahren zum Wechseln einer Rollierungseinheit einer Vorrichtung nach einem der vorstehenden Ansprüche vorgeschlagen. Erfindungsgemäß kann die Rollierungseinheit dabei gewechselt werden, indem eine formschlüssige und/oder kraftschlüssige Arretierung des Wechselmechanismus zunächst gelöst wird. Beispielsweise kann diese Arretierung eine Handschraube umfassen, einen Klemmhebel oder eine Zugfeder, mittels welcher die Einheiten im montierten Zustand miteinander in Kontakt gehalten werden. Als zweiten Schritt kann die zweite Führungseinheit entfernt werden. Dies kann beispielsweise durch ein Abziehen der zweiten Führungseinheit von einer Anzahl horizontaler und parallel zueinander angeordneter Stäbe erfolgen, wobei die Stäbe im montierten Zustand mit Nuten oder Bohrungen innerhalb der zweiten Führungseinheit im Eingriff stehen. Alternativ kann die zweite Führungseinheit dabei mit der Rollierungseinheit verbunden bleiben, welche also zeitgleich aus der ersten Führungseinheit entfernt wird. Alternativ kann anschließend die Rollierungseinheit separat, mit anderen Worten also ohne hierbei mit der zweiten Führungseinheit verbunden zu sein, von der ersten Führungseinheit entfernt werden. Auch die Verbindungseinheit zwischen der Rollierungseinheit und ersten Führungseinheit kann das zuvor in Verbindung mit der zweiten Führungseinheit beschriebene Stabwerk umfassen. Während nun die Rollierungseinheit gewartet bzw. gesäubert wird, kann der Betrieb mit einer anderen Rollierungseinheit fortgesetzt werden. Hierzu wird eine andere Rollierungseinheit mit der ersten Führungseinheit verbunden, indem sie beispielsweise auf dasselbe Stabwerk aufgeschoben wird. Alternativ kann die andere Rollierungseinheit zunächst mit der zweiten Führungseinheit verbunden werden und gemeinsam mit dieser mit der ersten Führungseinheit in Verbindung gebracht werden. Alternativ kann die zweite Führungseinheit anschließend separat mit der ersten Führungseinheit oder der Rollierungseinheit verbunden werden. Zuletzt kann die Arretierung des Wechselmechanismus geschlossen werden, um die Einheiten gegen ein unerwünschtes Lösen voneinander zu sichern. Ein Vorteil des zuvor beschriebenen Verfahrens besteht darin, dass die Standzeiten der erfindungsgemäßen Vorrichtung sich deutlich verringern, Produktions- bzw. Prüfausfälle minimiert werden können und der Einsatz von kompliziertem Werkzeug und Fachkräften im Falle einer notwendigen Reinigung bzw. Wartung der Vorrichtung empfangen kann.

### Kurze Beschreibung der Zeichnungen

Nachfolgend werden Ausführungsbeispiele der Erfindung unter Bezugnahme auf die begleitende Zeichnung im Detail beschrieben. In den Zeichnungen ist:
- Figur 1: eine Explosionszeichnung eines Ausführungsbeispiels einer ersten Führungseinheit gemäß der vorliegenden Erfindung;
- Figur 2: eine Explosionszeichnung eines Ausführungsbeispiels einer erfindungsgemäßen Vorrichtung;
- Figur 3: eine perspektivische Ansicht eines Ausführungsbeispiels einer Rollierungseinheit gemäß der vorliegenden Erfindung;
- Figur 4: eine Explosionszeichnung eines Ausführungsbeispiels einer zweiten Führungseinheit gemäß der vorliegenden Erfindung;
- Figur 5: eine geschnittene perspektivische Darstellung eines Ausführungsbeispiels einer zusammengebauten Vorrichtung gemäß der vorliegenden Erfindung;
- Figur 6: eine alternative perspektivische Ansicht eines Ausführungsbeispiels einer zusammengebauten Vorrichtung gemäß der vorliegenden Erfindung; und
- Figur 7: eine perspektivische Ansicht eines Ausführungsbeispiels für eine zusammengebaute Vorrichtung, umfassend einen Schneckentrieb gemäß der vorliegenden Erfindung.

### Ausführungsformen der Erfindung

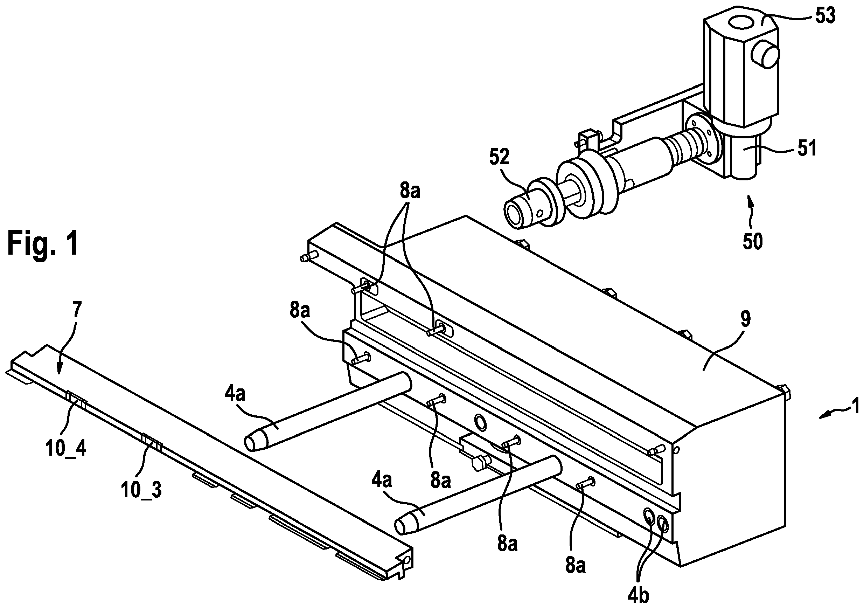

In Figur 1 ist eine Explosionszeichnung einer ersten Führungseinheit 1, umfassend ein in Förderrichtung längs erstrecktes Gehäuse 9, dargestellt. In Richtung der (in Figur 1 nicht dargestellten) Rollierungseinheit 3 stehen Stecker 8a für Elektroden 10_3, 10_4 in einem oberen Bereich des Gehäuses hervor. Diese Stecker 8a sind eingerichtet, mit einer Kontaktschiene 7 verbunden zu werden und die in der Kontaktschiene 7 angeordneten Elektroden 10_3, 10_4 mit elektrischer Energie zu versorgen. Die Elektroden 10_3, 10_4 sind jeweils eingerichtet, einen geförderten Behälter in einem Bereich in der Nähe des Bodens zu berühren. In einem unteren Bereich des Gehäuses sind parallel zwischen erstgenanntem Stecker 8a sowie auf gleicher Höhe Bolzen 4a vorgesehen. Die unteren Stecker 8a sind zur Versorgung der (in Figur 1 nicht dargestellten) Rollierungseinheit 3 mit elektrischer Energie vorgesehen. Die Bolzen 4a sind zur mechanischen Festlegung der Rollierungseinheit 3 an der ersten Führungseinheit 1 vorgesehen. Ebenfalls auf Höhe der unteren Stecker 8a bzw. der Bolzen 4a sind zwei elektrische Kontakte in einer Buchse 4b vorgesehen, über welche die Messsignale an die Sensorik und insbesondere die Elektroden der zweiten Führungseinheit 2 (in Figur 1 nicht dargestellt) angelegt werden. Weiter ist eine Antriebseinheit 50 für den Riementrieb 6 (in Figur 1 nicht dargestellt), umfassend einen Motor 53, ein Getriebe 51 sowie eine Kupplung 52, dargestellt.

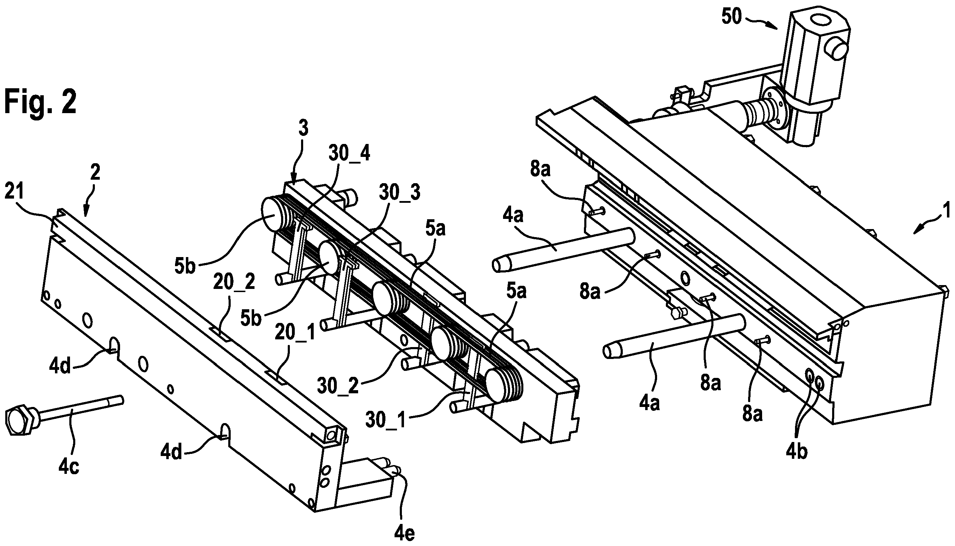

Figur 2 zeigt im Wesentlichen die in Figur 1 dargestellte Anordnung, erweitert um eine zweite Führungseinheit 2, eine Rollierungseinheit 3 sowie eine Handschraube 4c zur Verbindung der Einheiten 1, 2 und 3. Die Rollierungseinheit 3 sowie die zweite Führungseinheit 2 sind, ebenso wie die erste Führungseinheit 1, in Förderrichtung von länglicher bzw. schienenartiger Gestalt. Sowohl in der in Figur 2 dargestellten Explosionsansicht als auch in einer montierten Konfiguration sind die drei Bauteile im Wesentlichen parallel zueinander sowie zur Förderrichtung angeordnet. Die Rollierungseinheit 3 weist Riemen 5a auf, welche über Riemenscheiben 5b geführt und angetrieben werden. Von den fünf dargestellten Riemenscheiben 5b sind jeweils die äußeren sowie die mittlere zumindest teilweise von Riemen 5a umschlungen. Über die äußeren Riemenscheiben 5b kann daher die Spannung der Riemen 5a vorgenommen werden. Die beiden zwischen den erstgenannten Riemenscheiben 5b angeordneten Riemenscheiben tragen hingegen lediglich die über sie laufenden Riemen 5a, um ein übermäßiges Durchhängen dieser Riemen 5a zu verhindern. Mit den in Verbindung mit Figur 1 diskutierten unteren Steckern 8a korrespondieren horizontale Kontaktstäbe der Rollierungseinheit 3, von welchen aus Elektroden 30_1, 30_2, 30_3 und 30_4 im Wesentlichen senkrecht emporragen, welche neben bzw. zwischen den Riemen 5a einen sich verbreiternden Endbereich aufweisen. Die Oberseite dieser Endbereiche korrespondiert im Wesentlichen mit der Oberseite der Riemen 5a. Auf diese Weise können die Elektroden 30_1, 30_2, 30_3 und 30_4 über sie geförderte Behälter B (in Figur 2 nicht dargestellt) kontaktieren, so dass die über die Riemen 5a geförderten Behälter B über die Elektroden 30_1, 30_2, 30_3 und 30_4 mit einer elektrischen Spannung beaufschlagt werden können. Mit dem elektrischen Kontakt in der Buchse 4b in der ersten Führungseinheit 1 korrespondiert ein Stecker 4e in der zweiten Führungseinheit 2, über welchen zwei an der Oberseite eines Kontaktaufsatzes 21 der zweiten Führungseinheit 2 angeordnete Elektroden 20_1 und 20_2 mit Messsignalen beaufschlagt werden können. In einem unteren Bereich der zweiten Führungseinheit 2 sind zwei mit den Bolzen 4a der ersten Führungseinheit 1 korrespondierende Nuten 4b angeordnet. Eine Handschraube 4c ist eingerichtet, durch eine Bohrung jeweils in der zweiten Führungseinheit 2 und der Rollierungseinheit 3 mit einem Gewinde in der ersten Führungseinheit 1 in Eingriff gebracht zu werden. Mittels des dargestellten Wechselmechanismus' 4a, 4b, 4c, 4d und 4e ist die Rollierungseinheit 3 eingerichtet, in im wesentlich horizontaler Richtung senkrecht zur Förderrichtung mit der ersten Führungseinheit 1 sowohl mechanisch als auch elektrisch in Verbindung gebracht zu werden. Selbiges gilt für die zweite Führungseinheit 2 und die erste Führungseinheit 1 entsprechend.

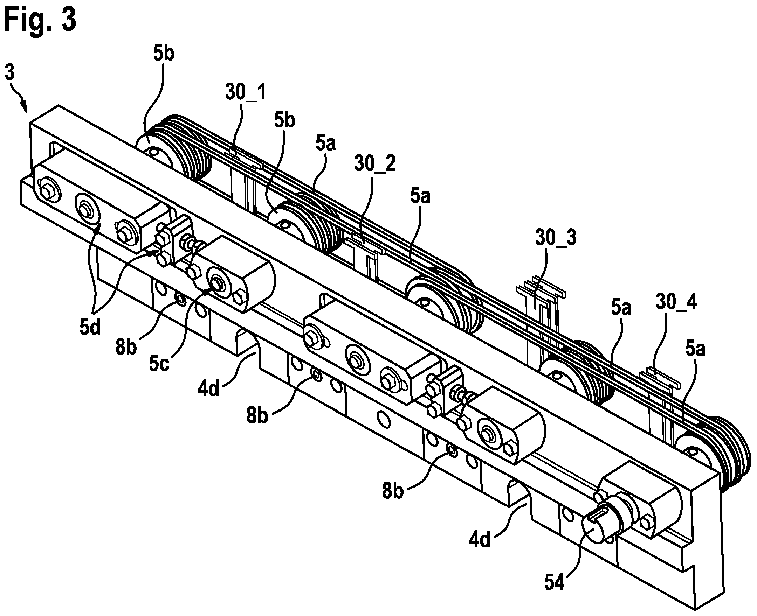

Figur 3 zeigt eine perspektivische Ansicht einer Rollierungseinheit 3. An der Unterseite der Rollierungseinheit 3 sind zwei Nuten 4d zur Aufnahme der Bolzen 4a der (in Figur 3 nicht dargestellten) ersten Führungseinheit 1 vorgesehen. Oberhalb der Nuten 4d sind in einem oberen Bereich der Rollierungseinheit 3 Lagerungen 5c der Riemenscheiben 5b angeordnet. Die Lagerungen der mittleren sowie im Bild links angeordneten Riemenscheiben 5b sind als Spanner 5d ausgestaltet, mittels welcher die Riemen 5a gespannt werden können. Mit anderen Worten sind die Lagerungen 5c der genannten Riemenscheiben 5b in Förderrichtung bzw. entgegen der Förderrichtung verschieblich gelagert. Die Welle 54 der in Figur 3 rechts angeordneten Riemenscheibe 5b ist als Antriebswelle 54 zum Eingriff mit der Kupplung 52 der Antriebseinheit 50 ausgestaltet. Erkennbar sind die Elektroden 30_1, 30_2, 30_3 und 30_4 horizontal und senkrecht zur Förderrichtung zueinander versetzt angeordnet. Während die Elektrode 30_2 in Richtung des Betrachters bzw. in Richtung der ersten Führungseinheit 1 tendiert und daher zwischen dem Korpus der Rollierungseinheit 3 und den beiden Riemen 5a angeordnet ist, ist die Elektrode 30_1 zwischen diesen beiden Riemen angeordnet. Die Elektroden 30_3 und 30_4 befinden sich hinsichtlich des Korpus der Rollierungseinheit 3 auf der den beiden anderen Riemen 5a gegenüberliegenden Seite. Alle vier Elektroden 30_1, 30_2, 30_3 und 30_4 sind mehrstöckig senkrecht zur Förderrichtung ausgestaltet. Mit anderen Worten sind zwei bzw. im Fall der Elektrode 30_3 drei Metallelemente im Wesentlichen vertikal und parallel zueinander auf Abstand angeordnet, um verschiedene Oberflächenbereiche eines als Prüflings geförderten Behälters kontaktieren zu können.

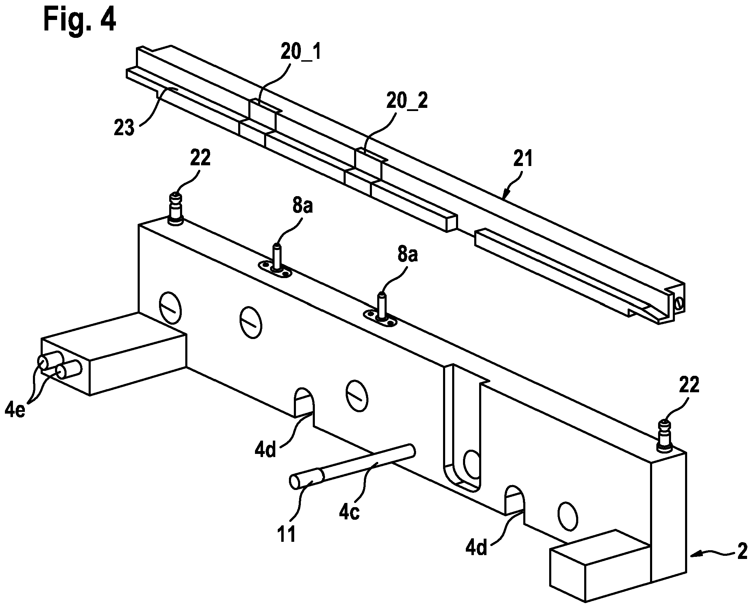

Figur 4 zeigt eine Explosionsdarstellung einer zweiten Führungseinheit 2, in welcher die elektrischen Kontakte des Steckers 4e, welche eingerichtet sind, in Eingriff mit den elektrischen Kontakten der Buchse 4b der (in Figur 4 nicht dargestellten) ersten Führungseinheit 1 in Eingriff gebracht zu werden, erkennbar sind. Den Korpus der zweiten Führungseinheit 2 durchdringt die Handschraube 4c, welche an ihrem dem Handgriff gegenüberliegenden Ende ein Gewinde 11 aufweist. Vertikal auf der Oberseite des Korpus an der zweiten Führungseinheit 2 stehen zwei Stecker 8a zur Versorgung zweier in einer Kontaktschiene 21 angeordneter Elektroden 20_1 und 20_2 mit Messsignalen hervor. An zwei maximal zueinander auf Abstand angeordneten Enden des Korpus der zweiten Führungseinheit 2 stehen zwei Pins 22 zur zusätzlichen mechanischen Verbindung mit dem Kontaktaufsatz 21 hervor. Der Kontaktaufsatz 21 weist in Richtung der (in Figur 4 nicht dargestellten) Rollierungseinheit 3 weisenden Seite einen Absatz 23 auf, welcher eingerichtet ist, den Verschluss bzw. einen Teil des Halses eines Prüflings bzw. Behälters zu kontaktieren. Hierzu bilden die Elektroden 20_1 und 20_2 der zweiten Führungseinheit 2 die Oberfläche des Absatzes 23 nach bzw. vollziehen die Winkel der Oberfläche mit.

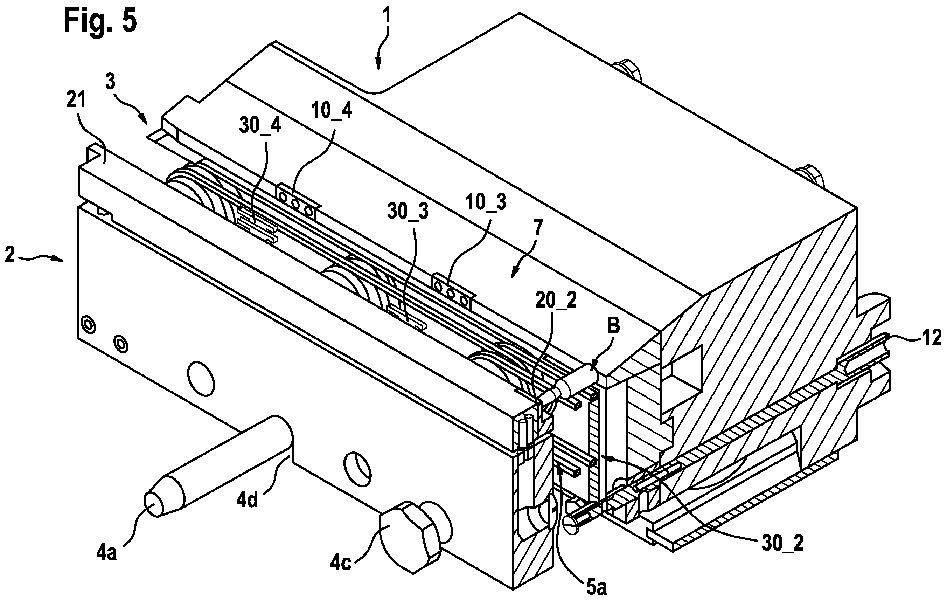

Figur 5 zeigt eine geschnittene Darstellung einer zusammengebauten Vorrichtung, bestehend aus einer ersten Führungseinheit 1, einer zweiten Führungseinheit 2 und einer zwischen den beiden angeordneten Rollierungseinheit 3. Aus der zweiten Führungseinheit 2 steht ein Bolzen 4a hervor, während die Handschraube 4c bis zu ihrem Anschlag in die zweite Führungseinheit 2 eingeschraubt ist. Ein Behälter B befindet sich nahe der Schnittkante auf dem Riemen 5a der Rollierungseinheit 3 und wird von einer Elektrode 20_2 der zweiten Führungseinheit 2 in einem Kopfbereich kontaktiert. Der Bodenbereich des Behälters B liegt an der Kontaktschiene 7 der ersten Führungseinheit an. In der Schnittebene ist die elektrische Verbindung zwischen einer Anschlussbuchse 12 für ein Trafokabel und einer Elektrode 30_2 der Rollierungseinheit 3 erkennbar. Weiter sind zwei Elektroden 10_3 und 10_4 an einer vertikalen Seite der Kontaktschiene 7 angeordnet, welche in Richtung geförderter Behälter B weisen. Gegenüber den Elektroden 10_3 und 10_4 sind jeweilige Gegenelektroden 30_3 und 30_4 der Rollierungseinheit 3 erkennbar.

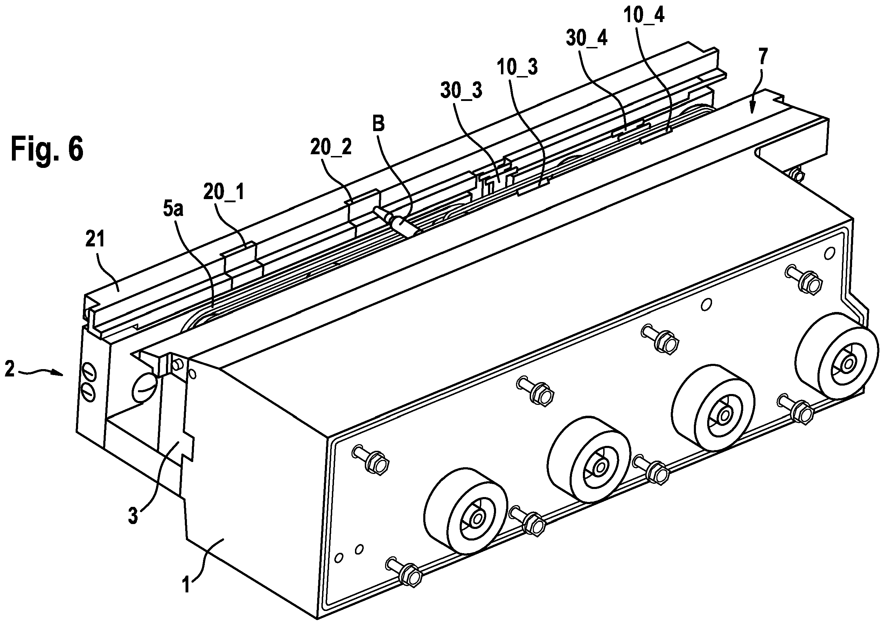

Figur 6 zeigt im Wesentlichen eine andere Perspektive auf die in Figur 5 gezeigte Vorrichtung. In dieser Ansicht sind die in der zweiten Führungseinheit 2 vorgesehenen Elektroden 20_1 und 20_2 zu sehen, wobei die Elektrode 20_2 einen Behälter B an dessen Kopfende kontaktiert. Der Absatz 23 im Kontaktaufsatz 21 der zweiten Führungseinheit 2 hat in Höhe der Elektrode 30_3 der Rollierungseinheit 3 eine Unterbrechung, um an dieser Stelle die Platzierung der Elektrode 30_3 zu erlauben. Des Weiteren ist die Elektrode 30_4 der Rollierungseinheit 3 sowie die den Elektroden 30_3 und 30_4 gegenüber angeordneten Elektroden 10_3 und 10_4 der Kontaktschiene 7 der ersten Führungseinheit 1 zu sehen.

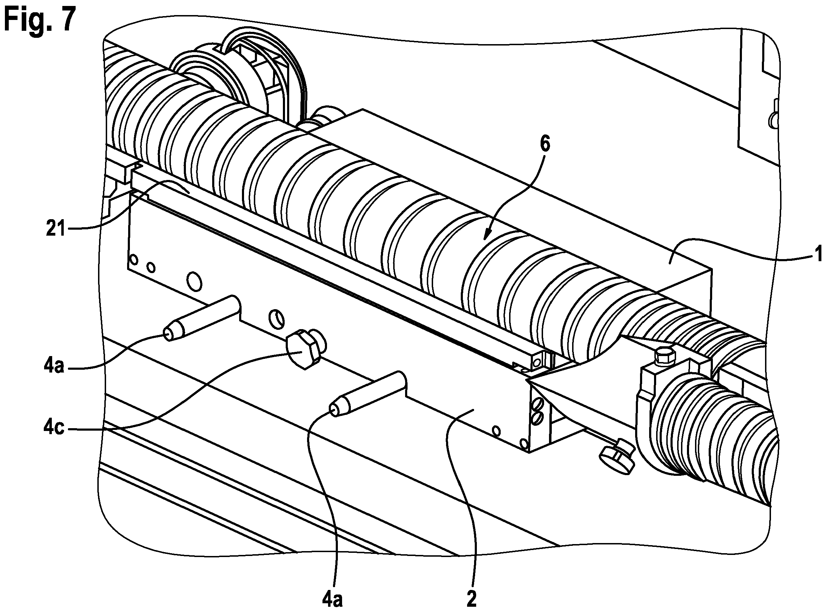

Figur 7 zeigt im Wesentlichen die in Figur 5 und Figur 6 gezeigte Anordnung, welche in Figur 7 um eine Transportschnecke erweitert ist. Die Transportschnecke 6 besteht im Wesentlichen aus einem zylindrisch geformten Körper, an dessen Oberfläche eine wendelartige Nut angeordnet ist. Die Steigung der Wendel ist an den Enden der Transportschnecke 6 geringer und vergrößert sich in Richtung ihrer Mitte, so dass bei einer Rotation der Transportschnecke 6 ein von der Nut ergriffener Behälter B mit zunehmender Geschwindigkeit von einem Randbereich der Transportschnecke 6 in Richtung der Mitte der Transportschnecke 6 bzw. mit abnehmender Geschwindigkeit aus der Mitte der Transportschnecke 6 in Richtung der Randbereiche der Transportschnecke 6 gefördert wird. Auf diese Weise vergrößert sich der Abstand zwischen aufeinanderfolgend in die Transportschnecke eingreifender Behälter B, wenn diese in Richtung der Transportschneckenmitte bewegt werden. Beispielsweise kann die Steigung der Transportschnecke einen Vorschub der Behälter B von 60 mm pro Umdrehung der Schnecke bewirken. Indem gleichzeitig der Elektrodenabstand beispielsweise 120 mm beträgt, ist sichergestellt, dass ein von einer ersten Elektrodenanordnung geprüfter Behälter B nicht vor Verlassen der ersten Elektrodenanordnung einen Einfluss auf das Messergebnis einer nachfolgenden Elektrodenanordnung hat. Zusammenwirken mit dem Riementrieb 5 der Rollierungseinheit 3 kann die Transportschnecke insbesondere dafür sorgen, dass beförderte Behälter B eine vordefinierte Drehung um eine Achse vollziehen, bevor sie die Kontaktbereiche einer Elektrode in einer der Einheiten verlassen. Da erfindungsgemäß alle Elektroden in der ersten Führungseinheit 1, in der zweiten Führungseinheit 2 oder in der Rollierungseinheit 3 angeordnet sind, kann die Transportschnecke 6 als ihrer Länge nach durchgehendes Bauteil unterbrechungsfrei ausgestaltet werden.

Es ist ein Kerngedanke der vorliegenden Erfindung, eine Dichtigkeitsprüfung und eine für eine solche verwendbare Baugruppe zur Verfügung zu stellen, welche einen schnellen und unkomplizierten Reinigungs- und Wartungsvorgang dadurch ermöglicht, dass die Dichtigkeitsprüfanordnung einen modularen Aufbau hat. Erfindungsgemäß sind drei Module, nämlich eine erste Führungseinheit, eine zweite Führungseinheit und eine Rollierungseinheit vorgesehen und eingerichtet, mittels weniger Handgriffe und insbesondere unter zeitgleicher bzw. miteinander einhergehender mechanischer sowie elektrischer Kontaktierung untereinander montiert bzw. demontiert zu werden.

Auch wenn die erfinderischen Aspekte und bevorzugten Ausführungsformen der Erfindung in Verbindung mit den beigefügten Zeichnungsfiguren im Detail und ausführlich beschrieben worden sind, so bleiben Modifikationen und Kombinationen auch zwischen den gezeigten Ausführungsbeispielen für den Fachmann möglich, ohne den Bereich der vorliegenden Erfindung zu verlassen, deren Schutzbereich durch die beigefügten Ansprüche definiert wird.

## Patentansprüche

1. Vorrichtung zum Fördern gefüllter Behälter (B) in einer Förderrichtung und Prüfen derselben auf ausgetretene Flüssigkeit umfassend:
- eine erste Führungseinheit (1) zum Führen eines ersten Abschnitts eines Behälters (B), die eine erste Elektrode (10_3, 10_4) aufweist,
- eine zweite Führungseinheit (2) zum Führen eines zweiten Abschnitts des Behälters (B), welche eine zweite Elektrode (20_1, 20_2) aufweist,
- eine Rollierungseinheit (3), welche einen Riementrieb (5) sowie eine dritte Elektrode (30_1, 30_2, 30_3, 30_4) aufweist,
wobei die Rollierungseinheit (3) eingerichtet ist, den Behälter (B) in Rotation zu versetzen,
wobei die erste Führungseinheit (1), die zweite Führungseinheit (2) und die Rollierungseinheit (3) als zusammenhängende Module montiert sind, wobei die Vorrichtung einen Wechselmechanismus (4a, 4b, 4c, 4d, 4e) aufweist, mittels welchem
- die Rollierungseinheit (3) im Ganzen mechanisch mit der ersten Führungseinheit (1) in Verbindung gebracht bzw. von ihr entfernt werden kann und
- die zweite Führungseinheit (2) im Ganzen mechanisch mit der Rollierungseinheit (3) oder der ersten Führungseinheit (1) in Verbindung gebracht bzw. von ihr entfernt werden kann, **dadurch gekennzeichnet, dass** die Vorrichtung eingerichtet ist, mittels einer Elektrode (10_3, 10_4) der ersten Führungseinheit (1) und/oder einer Elektrode (20_1, 20_2) der zweiten Führungseinheit (2) jeweils im Zusammenwirken mit einer Elektrode (30_1, 30_2, 30_3, 30_4) der Rollierungseinheit (3) einen Behälter (B) abschnittweise und senkrecht zur Förderrichtung mit einer elektrischen Spannung zu beaufschlagen, und/oder
- wobei mittels des Wechselmechanismus' (4a, 4b, 4c, 4d, 4e) die zweite Führungseinheit (2) und die Rollierungseinheit (3) jeweils elektrisch miteinander verbunden oder voneinander getrennt und/oder mit der ersten Führungseinheit (1) verbunden bzw. von ihr getrennt werden können.

2. Vorrichtung nach Anspruch 1 , wobei der Wechselmechanismus (4a, 4b, 4c, 4d, 4e) eine mechanische (4a, 4c, 4d) und elektrische (4b, 4e) Steckverbindung und/oder eine mechanische Schraubverbindung (4c) zwischen der ersten Führungseinheit (1), der zweiten Führungseinheit (2) und der Rollierungseinheit (3) umfasst, wobei die mechanische (4a, 4c, 4d) und die elektrische (4b, 4e) Verbindung bei einer vordefinierten Relativbewegung zwischen der ersten Führungseinheit (1), der zweiten Führungseinheit (2) und der Rollierungseinheit (3) miteinander einhergehen.

3. Vorrichtung nach einem der vorstehenden Ansprüche, wobei weiter die Elektrode (10_3, 10_4) der ersten Führungseinheit (1), die Elektrode (20_1, 20_2) der zweiten Führungseinheit (2) sowie die Elektrode (30_1, 30_2, 30_3, 30_4) der Rollierungseinheit (3) eingerichtet sind, einen unterhalb des Schwerpunktes des Behälter (B) befindlichen Oberflächenbereich des Behälter (B) elektrisch, insbesondere auch physikalisch, zu kontaktieren.

4. Vorrichtung nach einem der vorstehenden Ansprüche, wobei Elektroden (30_1, 30_2, 30_3, 30_4) der Rollierungseinheit (3) senkrecht zur Förderrichtung zueinander versetzt sind, wobei insbesondere diejenigen Elektroden (30_3, 30_4), welche mit Elektroden (10_3, 10_4) der ersten Führungseinheit (1) zusammenzuwirken eingerichtet sind, gegenüber denjenigen Elektroden (30_1, 30_2), welche mit Elektroden (20_1, 20_2) der zweiten Führungseinheit (2) zusammenzuwirken eingerichtet sind, in Richtung der zweiten Führungseinheit (2) versetzt sind.

5. Vorrichtung nach einem der vorstehenden Ansprüche, wobei Abschnitte der Elektroden (30_1, 30_2, 30_3, 30_4) der Rollierungseinheit (3) zwischen jeweils zwei Riemen (5a) des Riementriebs (5) angeordnet sind und/oder eingerichtet sind, in elektrischen, insbesondere mechanischen, Kontakt mit einer Oberfläche durch die Rollierungseinheit (3) geförderter Behälter (B) zu gelangen.

6. Vorrichtung nach einem der vorstehenden Ansprüche, wobei die Vorrichtung weiter einen Schneckentrieb (6) umfasst, welcher eingerichtet ist, zwischen sich (6) und der Rollierungseinheit (3) befindliche Behälter (B) zu fördern.

7. Vorrichtung nach Anspruch 6, wobei die zweite Führungseinheit (2) und die Rollierungseinheit (3) unabhängig vom Vorhandensein des Schneckentriebs (6) aus der ersten Führungseinheit (1) entnommen bzw. mit der ersten Führungseinheit (1) verbunden werden können.

8. Vorrichtung nach einem der vorstehenden Ansprüche, wobei die Erstreckung der Elektroden (10_3, 10_4, 20_1, 20_2, 30_1, 30_2, 30_3, 30_4) in Förderrichtung und die Geschwindigkeit des Riementriebs (5), insbesondere im Zusammenwirken mit dem Schneckentrieb (6) nach Anspruch 7 oder 8, derart auf einander abgestimmt sind, dass geförderte Behälter (B) unter Kontakt mit einer jeden Elektrode (10_3, 10_4, 20_1, 20_2, 30_1, 30_2, 30_3, 30_4) jeweils mindestens eine vollständige Umdrehung um eine eigene Achse vollziehen.

9. Verfahren zum Wechseln einer Rollierungseinheit (3) einer Vorrichtung nach einem der vorstehenden Ansprüche, umfassend die Schritte:
- Lösen einer formschlüssigen und/oder kraftschlüssigen Arretierung (4c) des Wechselmechanismus' (4),
- Entfernen der zweiten Führungseinheit (2),
- Entfernen der Rollierungseinheit (3),
- Einsetzen einer anderen Rollierungseinheit,
- Einsetzen der zweiten Führungseinheit (2),
- Schließen der Arretierung (4c) des Wechselmechanismus' (4).

## Claims

1. Device for conveying filled containers (B) in a conveying direction and checking the same for liquid that has leaked out, comprising:
- a first guide unit (1) for guiding a first section of a container (B), which unit has a first electrode (10_3, 10_4),
- a second guide unit (2) for guiding a second section of the container (B), which unit has a second electrode (20_1, 20_2),
- a tumbling unit (3), which has a belt drive (5) and a third electrode (30_1, 30_2, 30_3, 30_4), the tumbling unit (3) being configured to set the containers (B) in rotation,
the first guide unit (1), the second guide unit (2) and the tumbling unit (3) being mounted as a coherent module,
the device having a changing mechanism (4a, 4b, 4c, 4d, 4e), by means of which
- the roller unit (3) as a whole can be connected mechanically to the first guide unit (1) or removed therefrom, and
- the second guide unit (2) can be connected mechanically to the tumbling unit (3) or the first guide unit (1) or removed therefrom, **characterized in that** the device is configured, by means of an electrode (10_3, 10_4) of the first guide unit (1) and/or an electrode (20_1, 20_2) of the second guide unit (2), in each case in interaction with an electrode (30_1, 30_2, 30_3, 30_4) of the tumbling unit (3), to apply an electric voltage to a container (B) section by section and at right angles to the conveying direction, and/or
- wherein, by means of the changing mechanism (4a, 4b, 4c, 4d, 4e), the second guide unit (2) and the tumbling unit (3) can each be connected electrically to each other or separated from each other and/or connected to the first guide unit (1) or separated therefrom.

2. Device according to Claim 1, wherein the changing mechanism (4a, 4b, 4c, 4d, 4e) comprises a mechanical (4a, 4c, 4d) and electrical (4b, 4e) plug-in connection and/or a mechanical screw connection (4c) between the first guide unit (1), the second guide unit (2) and the tumbling unit (3), wherein the mechanical (4a, 4c, 4d) and the electrical (4b, 4e) connection are associated with each other during a predefined relative movement between the first guide unit (1), the second guide unit (2) and the tumbling unit (3).

3. Device according to one of the preceding claims, wherein, in addition, the electrode (10_3, 10_4) of the first guide unit (1), the electrode (20_1, 20_2) of the second guide unit (2) and also the electrode (30_1, 30_2, 30_3, 30_4) of the tumbling unit (3) are configured to make electrical, in particular also physical, contact with the surface region of the container (B) located below the centre of gravity of the container (B).

4. Device according to one of the preceding claims, wherein electrodes (30_1, 30_2, 30_3, 30_4) of the tumbling unit (3) are offset relative to one another at right angles to the conveying direction, wherein in particular those electrodes (30_3, 30_4) which are configured to interact with electrodes (10_3, 10_4) of the first guide unit (1) are offset in the direction of the guide unit (2) as compared with those electrodes (30_1, 30_2) which are configured to interact with electrodes (20_1, 20_2) of the second guide unit (2).

5. Device according to one of the preceding claims, wherein sections of the electrodes (30_1, 30_2, 30_3, 30_4) of the tumbling unit (3) are arranged between respectively two belts (5a) of the belt drive (5) and/or are configured to come into electrical, in particular mechanical, contact with a surface of containers (B) conveyed by the tumbling unit (3).

6. Device according to one of the preceding claims, wherein the device further comprises a worm drive (6), which is configured to convey containers (B) located between itself (6) and the tumbling unit (3) .

7. Device according to Claim 6, wherein the second guide unit (2) and the tumbling unit (3) can be removed from the first guide unit (1) or connected to the first guide unit (1), irrespective of the presence of the worm drive (6).

8. Device according to one of the preceding claims, wherein the extent of the electrodes (10_3, 10_4, 20_1, 20_2, 30_1, 30_2, 30_3, 30_4) in the conveying direction and the speed of the belt drive (5), in particular in interaction with the worm drive (6) according to Claim 7 or 8, are coordinated with one another in such a way that conveyed containers (B) with contact with each electrode (10_3, 10_4, 20_1, 20_2, 30_1, 30_2, 30_3, 30_4) each complete at least one complete revolution about their own axis.

9. Method for changing a tumbling unit (3) of a device according to one of the preceding claims, comprising the steps:
- loosening a form-fitting and/or force-fitting locking means (4c) of the changing mechanism (4),
- removing the second guide unit (2),
- removing the tumbling unit (3),
- inserting another tumbling unit,
- inserting the second guide unit (2),
- closing the locking means (4c) of the changing mechanism (4).

## Revendications

1. Dispositif pour transporter des récipients remplis (B) dans une direction de transport et les contrôler pour détecter des fuites de liquide, comprenant :
- une première unité de guidage (1) destinée à guider une première partie d'un récipient (B) et comportant une première électrode (10_3, 10_4),
- une deuxième unité de guidage (2) destinée à guider une deuxième partie du récipient (B) et comportant une deuxième électrode (20_1, 20_2),
- une unité de galetage (3) qui présente un entraînement par courroie (5) et une troisième électrode (30_1, 30_2, 30_3, 30_4),
dans lequel l'unité de galetage (3) est conçue pour mettre le récipient (B) en rotation,
dans lequel la première unité de guidage (1), la deuxième unité de guidage (2) et l'unité de galetage (3) sont montées sous la forme de modules continus,
dans lequel le dispositif comprend un mécanisme de remplacement (4a, 4b, 4c, 4d, 4e) au moyen duquel
- l'unité de galetage (3) dans son ensemble peut être reliée mécaniquement à la première unité de guidage (1) ou en être retirée, et
- la deuxième unité de guidage (2) dans son ensemble peut être reliée mécaniquement à l'unité de galetage (3) ou à la première unité de guidage (1) ou en être retirée, **caractérisé en ce que** le dispositif est conçu pour appliquer une tension électrique à un récipient (B) par sections et perpendiculairement à la direction de transport au moyen d'une électrode (10_3, 10_4) de la première unité de guidage (1) et/ou d'une électrode (20_1, 20_2) de la deuxième unité de guidage (2) respectivement en coopération avec une électrode (30_1, 30_2, 30_3, 30_4) de l'unité de galetage (3), et/ou
- dans lequel la deuxième unité de guidage (2) et l'unité de galetage (3) peuvent être reliées électriquement l'une à l'autre ou séparées l'une de l'autre et/ou reliées à la première unité de guidage (1) ou en être séparées au moyen du mécanisme de remplacement (4a, 4b, 4c, 4d, 4e).

2. Dispositif selon la revendication 1, dans lequel le mécanisme de remplacement (4a, 4b, 4c, 4d, 4e) comprend un raccord enfichable mécanique (4a, 4c, 4d) et électrique (4b, 4e) et/ou un raccord mécanique à vis (4c) entre la première unité de guidage (1), la deuxième unité de guidage (2) et l'unité de galetage (3), dans lequel les liaisons mécanique (4a, 4c, 4d) et électrique (4b, 4e) s'accompagnent l'une l'autre dans un mouvement relatif prédéfini entre la première unité de guidage (1), la deuxième unité de guidage (2) et l'unité de galetage (3) .

3. Dispositif selon l'une des revendications précédentes, dans lequel l'électrode (10_3, 10_4) de la première unité de guidage (1), l'électrode (20_1, 20_2) de la deuxième unité de guidage (2) et l'électrode (30_1, 30_2, 30_3, 30_4) de l'unité de galetage (3) sont en outre prévues pour entrer en contact électriquement, en particulier également physiquement, avec une zone de surface du récipient (B) située sous le centre de gravité du récipient (B).

4. Dispositif selon l'une des revendications précédentes, dans lequel les électrodes (30_1, 30_2, 30_3, 30_4) de l'unité de galetage (3) sont décalées les unes par rapport aux autres perpendiculairement à la direction de transport, dans lequel les électrodes (30_3, 30_4) qui sont conçues pour coopérer avec des électrodes (10_3, 10_4) de la première unité de guidage (1), sont , en particulier décalées dans la direction de la deuxième unité de guidage (2) par rapport aux électrodes (30_1, 30_2) qui sont conçues pour coopérer avec des électrodes (20_1, 20_2) de la deuxième unité de guidage (2).

5. Dispositif selon l'une des revendications précédentes, dans lequel des sections des électrodes (30_1, 30_2, 30_3, 30_4) de l'unité de galetage (3) sont disposées entre deux courroies (5a) de l'entraînement à courroies (5) et/ou sont conçues pour entrer en contact électrique, notamment mécanique, avec une surface de récipients (B) transportés par l'unité de galetage (3).

6. Dispositif selon l'une des revendications précédentes, dans lequel le dispositif comprend en outre une vis sans fin (6) qui est conçue pour transporter des récipients (B) situés entre celle-ci (6) et le dispositif de galetage (3).

7. Dispositif selon la revendication 6, dans lequel la deuxième unité de guidage (2) et l'unité de galetage (3) peuvent être retirées de la première unité de guidage (1) ou être reliées à la première unité de guidage (1) indépendamment de la présence de la vis sans fin (6).

8. Dispositif selon l'une des revendications précédentes, dans lequel l'extension des électrodes (10_3, 10_4, 20_1, 20_2, 30_1, 30_2, 30_3, 30_4) dans la direction du transport et la vitesse de la courroie (5), notamment en coopération avec la vis sans fin (6) selon la revendication 7 et 8, sont adaptées l'une à l'autre de telle sorte que des récipients (B) transportés en contact avec chaque électrode (10_3, 10_4, 20_1, 20_2, 30_1, 30_2, 30_3, 30_4) effectuent chacun au moins un tour complet autour de leur propre axe.

9. Procédé pour remplacer une unité de galetage (3) d'un dispositif selon l'une des revendications précédentes, comprenant les étapes consistant à :
- séparer un dispositif de blocage (4c) à complémentarité de forme et/ou de force du mécanisme de remplacement (4),
- retirer la deuxième unité de guidage (2),
- retirer l'unité de galetage (3),
- insérer une autre unité de galetage,
- insérer la deuxième unité de guidage (2),
- refermer le dispositif de blocage (4c) du mécanisme de remplacement (4).
